# EUROPEAN PATENT APPLICATION

(11) **EP 4 282 998 A1**
(43) Date of publication of application: **29.11.2023**
(21) Application number: 22175735.4
(22) Date of filing: 27.05.2022
(51) Int. Cl.: C22B 26/12, C02F 1/60, F24T 10/20

(54) **SYSTEM, METHOD AND COMPOSITIONS FOR EXTRACTING LITHIUM FROM LOW-ENERGY BRINES**

(71) Applicant: Vulcan Energie Ressourcen GmbH, 76133 Karlsruhe (DE)
(72) Inventor: AICHER, Thomas, 79102 Freiburg (DE); GRANT, Alexander John, San Francisco (US)
(74) Representative: Durm Patentanwälte PartG mbB

(57) **Abstract**

The present invention relates to a system (10) for extracting lithium or lithium salts from a brine, comprising: a feed circuit (20) for receiving the brine; a pre-treatment circuit (30) for removing carbon dioxide, silica and transition metals from the brine to obtain a treated brine, said pre-treatment circuit including a first pH modification unit (31) configured to modify a pH of the brine to 4 to 5, preferably about 4.5, a depressurization unit (32) positioned downstream from the first pH modification unit configured to depressurize the brine to about atmospheric pressure, a second pH modification unit (33) positioned downstream from the depressurization unit configured to modify the pH of the brine to 9 to 11, preferably about 10, prior to resting the brine in a precipitation tank (36), a precipitate filter unit (34) positioned downstream from the second pH modification unit configured to remove a precipitate including the silica and the transition metals from the brine and a third pH modification unit (35) positioned downstream from the precipitate filter unit configured to modify the pH of the brine to 5 to 6 to obtain the treated brine; a direct lithium extraction circuit (40) for extracting a lithium enriched brine comprising the lithium or lithium salts from the treated brine to obtain a lithium depleted brine; and a post-treatment circuit (50) for redissolving at least part of the precipitate and adding it to the lithium depleted brine to obtain a treated lithium depleted brine for reinjection into a geothermal reservoir. The present invention further relates to a method for extracting lithium or lithium salts from a brine. Still further, the present invention relates to a treated brine, a lithium depleted brine, a treated lithium depleted brine and a lithium enriched brine.

## Description

The present invention relates to a system for extracting lithium or lithium salts from a brine. The present invention further relates to a method for extracting lithium or lithium salts from a brine. Still further, the present invention relates to a treated brine, a lithium depleted brine, a treated lithium depleted brine as well as a lithium enriched brine.

Several brine sources exist naturally. For instance, brine sources include brine deposits like the Salar de Atacama in Chile, Silver Peak Nevada, Salar de Uyuni in Bolivia, or the Salar de Hombre Muerte in Argentina. Other common brine sources are geothermal, oilfield, Smackover, and relict hydrothermal brines. Processes for commercially exploiting these types of geothermal brines are described in US 9,644,126 B2.

Geothermal brines are of particular interest for a variety of reasons. First, geothermal brines provide a source of power due to the fact that hot geothermal pools are stored at high pressure underground, which, when released to atmospheric pressure, can provide a flash-steam. The flash-steam can be used, for example, to run a power plant. Additionally, geothermal brines contain useful elements, which can be recovered and utilized for secondary processes. In some geothermal waters and brines, binary processes can be used to heat a second fluid to provide steam for the generation of electricity without the flashing of the geothermal brine.

One problem associated with geothermal brines when utilized for the production of electricity or lithium extraction results from scaling and deposition of solids. Silica and other solids that are dissolved within the geothermal brine precipitate out during all stages of brine processing, particularly during the cooling of a geothermal brine, and may eventually result in fouling of the injection wells or processing equipment.

It is known that geothermal brines can include various metal ions, particularly alkali and alkaline earth metals, as well as silica, iron, lead, silver, and zinc, in varying concentrations, depending upon the source of the brine. Recovery of these metals is potentially important to the chemical, pharmaceutical, and electronic industries. Typically, the economic recovery of metals from natural brines, which may vary widely in composition, depends not only on the specific concentration of the desired metal, but also on the concentrations of interfering ions, particularly silica, calcium, and magnesium, because the presence of the interfering ions will increase recovery costs, as additional steps must be taken to remove the interfering ions. Economic recovery also depends on the commercial cost and availability of the desired metal already present in the relevant market.

Silica (SiO₂) is known to deposit in piping as scale deposits, typically as a result of the cooling of a geothermal brine. Silica can particularly be present as silicates in the brine ortho, meta, di and tri silicates. When they are precipitated they can be amorphous and crystalline silicas. Frequently, geothermal brines are near saturation with respect to the silica concentration and upon cooling, deposition occurs because of the lower solubilities at lower temperatures. This is combined with the polymerization of silica and co-precipitation with other species, particularly metals. This is seen in geothermal power stations and is particularly true for amorphous silica/silicates. Additionally, silica is a known problem in reverse osmosis desalination plants. Thus, removal of silica from low concentration brines may help to eliminate these scale deposits, and thus reduce costs and improve efficiency of facilities that use and process brines.

Known methods for the removal of silica from geothermal brines include the use of a geothermal brine clarifier for the removal and recovery of silica solids that may be precipitated with the use of various seed materials, or the use of compounds that absorb silica, such as magnesium oxide, magnesium hydroxide, or magnesium carbonate. In addition to a less than complete recovery of silicon from brines, prior methods also suffer in that they typically remove ions and compounds other than just silica and silicon containing compounds.

Geothermal brines can be flashed via several processes. There is the conventional method to produce steam for power. There have also been modifications to the conventional dual direct flash evaporation method to include multiple flash evaporation stages. One modification to the conventional dual direct flash method is the crystallizer reactor clarifier process. In the crystallizer reactor clarifier process, a reactor clarifier precipitates components that can cause scaling, such as iron rich amorphous silica, and removes suspended particles from the brines before injection into the flash process. The process also seeds the brine in the flash vessels to reduce scale formation. Thus, when precipitation occurs it is more likely that it will occur on the seed slurry than on the metal surfaces of the flash apparatus. There is also the pH modification process that differs from the crystallizer reactor clarifier process. In the pH modification process, compounds that cause scaling are maintained in solution. By lowering the pH of the brine solution, for example, as low as 3.0, compounds that typically cause scaling on the flash apparatus are maintained in solution. By lowering pH and modifying pressures, the compounds are maintained in solution and scaling is prevented or reduced.

Thus, although conventional methods employed in the processing of ores and brines can remove some of the silica present in silica containing solutions and brines, there exists a need to develop methods that are selective for the removal of silica from brines and other silica containing solutions at high yields to produce treated compositions with reduced silica concentrations. Additionally, once certain components are removed, the geothermal brine compositions may be injected into a geothermal reservoir, such as into the original reservoir. Compositions for improving injectivity of such brines will improve the efficiency of the process, as improved injectivity will reduce the costs and time associated with cleaning the equipment used for injecting such brines and will also increase long-term permeable flow. While current practices at geothermal plants have focused on reduction of scaling on the apparatus associated with the flash process, there is still a need to reduce scaling after the processing of the brine for energy. The current practice at Salton Sea geothermal plants is to clean injection wells on an annual basis. This is a significant expense as there are typically multiple wells (i.e., three wells) to clean out. This is typically done by hydroblasting or acid treatment. After a certain time, typically three years, this is no longer effective and portions of wells must be routed out to remove blockages, which is expensive and time consuming. The routing process can usually be repeated twice before the wells have to be completely replaced. Thus, compositions and processes that would reduce fouling and prolong the time between required cleanings would be of substantial benefit.

While technologies for extraction of useful minerals in a low carbon footprint manner from geothermal brines such as those originating in the Salton Sea area have been described above (cf. also US 9,644,126 B2), geothermal brines, such as those originating in the Upper Rhine Valley region exhibit properties that make them unsuitable as feedstocks for such previously described processes.

The technologies for extraction of useful minerals in a low carbon footprint manner from geothermal brines disclosed in US 9,644,126 B2, while useful for high-energy geothermal brines such as those originating in the Salton Sea area and others having similar properties, are often not appropriate for processing certain other geothermal brines, such as those originating in the Upper Rhine Valley.

Geothermal brines originating in the Upper Rhine Valley region (URV raw brines) typically exit the borehole at around 165°C, while geothermal brines originating in the Salton Sea area exit the borehole at around 350°C. Herein, geothermal brines exiting the borehole at more than 255°C are called high-energy brines and are sometimes referred as Salton Sea or Salton Sea derived brines, while geothermal brines exiting the borehole at or below 255°C are called low-energy brines and are sometimes referred to as Upper Rhine Valley brines, or Upper Rhine Valley derived brines. The methods previously disclosed for the treatment and lithium extraction of high-energy brines, such as those found in the Salton Sea regions are often not suitable for processing low-energy brines because of the differences in the mineral compositions resulting at least in part from the differences in temperature of the raw brines at the borehole. Because of the lower exit temperature, the low-energy brines do not have the high amounts of iron, manganese and zinc that allow for the precipitation of silica components during the operation known as steam flashing. In the case of the low-energy brines, reducing the pressure of the raw brine either does not cause steam to flash off, or a reduced amount of steam is flashed off, and the dissolved solids in many cases tend to remain in solution, or are only partially precipitated.

Thus, novel processes are needed to allow for the processing of low-energy brines to allow for the facile and uneventful extraction of valuable minerals such as lithium. In particular, it is desired to provide an approach for modifying a low-energy brine so that it can be supplied to a direct lithium extraction circuit without damaging the sorbent material. Furthermore, it is desired to make it possible to reinject the depleted geothermal brine into a geothermal reservoir after the lithium extraction.

In view of the above, a first aspect of the present invention relates to a system for extracting lithium or lithium salts from a brine, comprising:
- a feed circuit for receiving the brine;
- a pre-treatment circuit for removing carbon dioxide, silica and transition metals from the brine to obtain a treated brine, said pre-treatment circuit including a first pH modification unit configured to modify a pH of the brine to 4 to 5, preferably about 4.5, a depressurization unit positioned downstream from the first pH modification unit configured to depressurize the brine to about atmospheric pressure, a second pH modification unit positioned downstream from the depressurization unit configured to modify the pH of the brine to 9 to 11, preferably about 10, prior to resting the brine in a precipitation tank, a precipitate filter unit positioned downstream from the second pH modification unit configured to remove a precipitate including the silica and the transition metals from the brine and a third pH modification unit positioned downstream from the precipitate filter unit configured to modify the pH of the brine to 5 to 6 to obtain the treated brine;
- a direct lithium extraction circuit for extracting a lithium enriched brine comprising the lithium or lithium salts from the treated brine to obtain a lithium depleted brine; and
- a post-treatment circuit for redissolving at least part of the precipitate and adding it to the lithium depleted brine to obtain a treated lithium depleted brine for reinjection into a geothermal reservoir.

Another aspect of the present invention relates to a method for extracting lithium or lithium salts from a brine, comprising steps of:
- receiving the brine;
- removing carbon dioxide, silica and transition metals from the brine to obtain a treated brine by modifying a pH of the brine to 4 to 5, preferably about 4.5 in a first pH modification unit, depressurizing the brine to about atmospheric pressure in a depressurization unit positioned downstream from the first pH modification unit, modifying the pH of the brine to 9 to 11, preferably about 10, prior to resting the brine in a precipitation tank in a second pH modification unit positioned downstream from the depressurization unit, removing a precipitate including the silica and the transition metals from the brine in a precipitate filter unit positioned downstream from the second pH modification unit and modifying the pH of the brine to 5 to 6 in a third pH modification unit positioned downstream from the precipitate filter unit to obtain the treated brine;

- extracting a lithium enriched brine comprising the lithium or lithium salts from the treated brine to obtain a lithium depleted brine; and
- redissolving at least part of the precipitate and adding it to the lithium depleted brine to obtain a treated lithium depleted brine for reinjection into a geothermal reservoir.

Yet another aspect relates to a treated brine comprising more than 50 mg/L but less than 225 mg/L lithium, less than 45 g/L sodium, less than 8 g/L potassium, less than 10 mg/L magnesium, less than16 g/L calcium, less than 700 mg/L strontium, less than 80 mg/L boron, less than 5 mg/L iron, manganese, zinc, less than 9 mg/L silica, more than 90 mg/L sulfate, having a total dissolved solids of more than 50 g/L but less than 200 g/L.

Yet another aspect relates to a lithium depleted brine comprising more than 1 mg/L but less than 30 mg/L lithium, less than 65 g/L sodium, less than 8 g/L potassium, less than 30 mg/L magnesium, less than16 g/L calcium, less than 700 mg/L strontium, less than 80 mg/L boron, more than 90 mg/L sulfate, having a total dissolved solids of more than 50 g/L but less than 200 g/L.

Yet another aspect relates to a treated lithium depleted brine for reinjection comprising more than 1 mg/L but less than 30 mg/L lithium, less than 45 g/L sodium, less than 8 g/L potassium, less than 200 mg/L magnesium, less than16 g/L calcium, less than 700 mg/L strontium, less than 80 mg/L boron, more than 1 mg/L but less than 35 mg/L iron, more than 1 mg/L but less than 35 mg/L manganese, more than 1 mg/L but less than 25 mg/L zinc and more than 1 mg/L but less than 160 mg/L silica, more than 90 mg/L sulfate, more than 50 g/L but less than 200 g/L total dissolved solids.

Yet another aspect relates to a lithium enriched brine comprising more than 600 mg/L but less than 2000 mg/L lithium, more than 50 mg/L but less than 1200 mg/L sodium, more than 10 mg/L but less than 200 mg/L potassium, less than 200 mg/L magnesium, more than 100 mg/L but less than 600 g/L calcium, more than 5 mg/L but less than 40 mg/L strontium, less than 10 mg/L boron, iron, manganese, and zinc, less than20 mg/L silica, more than 90 mg/L sulfate, less than 10 g/L total dissolved solids, and having an oxidation reduction potential, ORP, of less than 0.

Preferred embodiments of the invention are defined in the dependent claims. It shall be understood that the claimed method, system and compositions have similar and/or identical preferred embodiments as the claimed system, in particular as defined in the dependent claims and as disclosed herein.

The present invention is based on the idea of treating a brine, in particular a geothermal brine, preferably a low-energy geothermal brine, in a pre-treatment circuit prior to providing the treated brine to a direct lithium extraction circuit. The brine is received via a feed circuit, which can particularly be suitable for receiving a geothermal brine from a geothermal reservoir. Preferably, the geothermal brine is received from a geothermal power plant. In the pre-treatment circuit carbon dioxide, silica and transition metals are removed from the brine. In this process, the pH of the brine is modified multiple times in order to enable an efficient processing. In particular, the pH is modified so that undesired components that could potentially hamper the direct lithium extraction process and/or result in a damaging of equipment can be removed from the brine. In particular, the undesired components are removed by means of a filter in a filter unit.

After the pre-treatment the treated brine is fed into the direct lithium extraction circuit to separate a lithium enriched brine and a lithium depleted brine. The lithium enriched brine can also be referred to as lithium enriched eluate product stream and forms the basis for extracting lithium or lithium salts. The lithium depleted brine is further processed in the post-treatment circuit in which at least part of the precipitate is dissolved into the lithium depleted brine prior to reinjecting the treated lithium depleted brine into the geothermal reservoir.

In comparison to previous approaches for extracting lithium or lithium salts from a brine the approach of the present invention allows an efficient processing of low-energy brines at reduced environmental costs. In particular, it becomes possible to efficiently extract lithium or lithium salts at low environmental impact. The amount of waste is reduced since the treated lithium depleted brine is reinjected into the geothermal reservoir. All different components that had been removed for the direct lithium extractions are reinserted so that almost no waste remains and the geothermal reservoir is only minimally affected. This makes it possible to comply with regulations and assure that environmental impact is minimized. The pH modification thereby results in that the sorbent material in the direct lithium extraction process is not damaged so that costs can be reduced.

In a preferred embodiment the first pH modification unit is configured to add acid to the brine, in particular hydrochloric acid. Additionally or alternatively, the second pH modification unit is configured to add calcium hydroxide to the brine, in particular lime milk, said lime milk preferably having a concentration of 20 wt-% Ca(OH)₂. Additionally or alternatively, the third pH modification unit is configured to add acid to the brine, in particular hydrochloric acid. The use of hydrochloric acid and lime milk allows for a cost-efficient pH modification. In addition, a fast reaction and fast processing becomes possible.

In a preferred embodiment the depressurization unit includes a pressure reducing valve and a downstream pressure regulating valve. The two valves allow modifying the pressure of the brine so that the further processing becomes possible.

In a preferred embodiment the precipitate filter unit includes a candle filter, in particular a self-cleaning candle filter. Additionally or alternatively, the precipitate filter unit is configured to filter out particles with a size of 1-100 µm. The use of a candle filter allows an efficient filtering of particles in order to prepare the brine for the direct lithium extraction.

In a preferred embodiment the pre-treatment circuit includes an inhibitor unit positioned upstream from the pH modification unit configured to inject a BaSO₄ scale inhibitor into the brine, preferably to obtain a concentration of the BaSO₄ scale inhibitor of 3-10 mg/l, preferably 3-5 mg/l. Additionally or alternatively, the pre-treatment circuit includes a stripping unit positioned downstream from the first pH modification unit configured to strip the brine with nitrogen, steam or vacuum. The inhibitor unit allows for further processing of the brine. The stripping unit further modifies the brine.

In a preferred embodiment the precipitation tank is configured to rest the brine for 5 to 30 minutes and/or includes a mixer for mixing the brine with an additive. The resting alone or in combination with the use of a mixer allows for efficient precipitation.

In a preferred embodiment, the direct lithium extraction circuit includes a holding unit for holding a sorbent material for the extraction of the lithium or lithium salts from the treated brine. This sorbent material preferably has a bed porosity of 0.35 to 0.4. The direct lithium extraction circuit preferably includes an eluate extraction unit configured to remove the lithium or lithium salts from the sorbent material by contacting the sorbent material with water. In particular the sorbent material can be flushed so that the lithium or lithium salt is washed out. The lithium enriched brine is then obtained.

In a preferred embodiment the post-treatment circuit includes a dissolving unit configured to dissolve the at least part of the precipitate and an addition unit to add the dissolved precipitates to the lithium depleted brine. The dissolving unit is preferably configured to add concentrated hydrochloric acid, in particular concentrated hydrochloric acid with 32 wt-%, to the lithium depleted brine to obtain a pH of 2-3. Waste is avoided. The brine can be reinjected into the geothermal reservoir to avoid undesired environmental impacts.

In a preferred embodiment the post-treatment circuit includes a scavenging unit for removing oxygen from the lithium depleted brine by means of an oxygen scavenger. Alternatively or additionally, the post-treatment circuit includes a fourth pH modification unit for increasing the pH of the lithium depleted brine to correspond to the pH of the received brine, said fourth pH modification unit preferably being configured to add a base to the lithium depleted brine, in particular NaOH or LiOH. Alternatively or additionally, the post-treatment circuit includes a repressurization unit configured to repressurize the treated lithium depleted brine for reinjecting the brine into a geothermal reservoir. Removing oxygen, modifying the pH and repressurizing the treated lithium depleted brine has the effect that environmental impact is further reduced. In particular, the brine is returned into the geothermal reservoir as close as possible to its original state.

In a preferred embodiment the pre-treatment circuit is configured to obtain a treated brine comprising more than 50 mg/L but less than 225 mg/L lithium, less than 45 g/L sodium, less than 8 g/L potassium, less than 10 mg/L magnesium, less than16 g/L calcium, less than 700 mg/L strontium, less than 80 mg/L boron, less than 5 mg/L of iron, manganese, zinc, less than 9 mg/L silica, more than 90 mg/L sulfate, having a total dissolved solids of more than 50 g/L but less than 200 g/L. The pre-treatment circuit produces or outputs the above-specified treated brine to be fed into the direct lithium extraction circuit.

In a preferred embodiment the direct lithium extraction circuit is configured to obtain a lithium depleted brine comprising more than 1 mg/L but less than 30 mg/L lithium, less than 65 g/L sodium, less than 8 g/L potassium, less than 30 mg/L magnesium, less than16 g/L calcium, less than 700 mg/L strontium, less than 80 mg/L boron, more than 90 mg/L sulfate, having a total dissolved solids of more than 50 g/L but less than 200 g/L. The direct lithium extraction circuit produces or outputs the above-specified lithium depleted brine to be fed into the post-treatment circuit.

In a preferred embodiment the post-treatment circuit is configured to obtain a treated lithium depleted brine comprising more than 1 mg/L but less than 30 mg/L lithium, less than 45 g/L sodium, less than 8 g/L potassium, less than 200 mg/L magnesium, less than16 g/L calcium, less than 700 mg/L strontium, less than 80 mg/L boron, more than 1 mg/L but less than 35 mg/L iron, more than 1 mg/L but less than 35 mg/L manganese, more than 1 mg/L but less than 25 mg/L zinc and more than 1 mg/L but less than 160 mg/L silica, more than 90 mg/L sulfate, more than 50 g/L but less than 200 g/L total dissolved solids. The post-treatment circuit produces or outputs the above-specified treated lithium depleted brine to be reinjected into the geothermal reservoir.

In a preferred embodiment the direct lithium extraction circuit is configured to extract from the treated brine a lithium enriched brine comprising more than 600 mg/L but less than 2000 mg/L lithium, more than 50 mg/L but less than 1200 mg/L sodium, more than 10 mg/L but less than 200 mg/L potassium, less than 200 mg/L magnesium, more than 100 mg/L but less than 600 g/L calcium, more than 5 mg/L but less than 40 mg/L strontium, less than 10 mg/L boron, iron, manganese, and zinc, less than20 mg/L silica, more than 90 mg/L sulfate, less than 10 g/L total dissolved solids, and having an oxidation reduction potential, ORP, of less than 0.

In a preferred embodiment, the system further comprises an injection system for adding anti-scale and corrosion inhibitors.

In a preferred embodiment of the system the feed circuit is configured to receive the brine at a temperature of 65°C to 85°C and at a pressure of 18-22 bar. In particular, the feed circuit can be configured to receive a geothermal brine from a geothermal power plant.

In a preferred embodiment of the system the pre-treatment circuit includes a collector unit for collecting carbon dioxide exiting the brine.

In a preferred embodiment of the system the direct lithium extraction circuit includes an additional filter unit for filtering the treated brine.

In a preferred embodiment the treated brine comprises about 180 mg/L lithium, 30 g/L sodium, 4 g/L potassium, 7mg/L magnesium, 8 g/L calcium, 400 mg/L strontium, 40 mg/L boron, less than 5 mg/L iron, less than 5 mg/L manganese, less than 5 mg/L zinc, less than 9 mg/L silica, about 125 mg/L sulfate, having a pH of about 6, an oxidation reduction potential, ORP, of about -200 mv, and total dissolved solids of about 110 g/L.

In a preferred embodiment the lithium depleted brine comprises about 19 mg/L lithium, about 30 g/L sodium, about 4 g/L potassium, less than 5 mg/L magnesium, about 8 g/L calcium, about 400 mg/L strontium, about 40 mg/L boron, less than 5 mg/L iron, less than 5 mg/L manganese, less than 5 mg/L zinc, less than 9 mg/L silica, about 125 mg/L sulfate, about 110 g/L total dissolved solids, having an oxidation reduction potential, ORP, of about -200 mv, and having a pH of about 6.

In a preferred embodiment the treated lithium depleted brine for reinjection comprises about 19 mg/L lithium, about 30 g/L sodium, about 4 g/L potassium, about 100 mg/L magnesium, about 8 g/L calcium, about 400 mg/L strontium, about 40 mg/L boron, more than 5 mg/L but less than 35 mg/L iron, more than 5 mg/L but less than 35 mg/L manganese, more than 5 mg/L but less than 25 mg/L zinc and more than 5 mg/L but less than 160 mg/L silica, about 125 mg/L sulfate, about 110 g/L total dissolved solids, an oxidation reduction potential, ORP, of about -200 mv, and having a pH of about 6.

In a preferred embodiment the lithium enriched brine comprises about 800 mg/L lithium, 600 g/L sodium, 100 g/L potassium, less than 2 mg/L magnesium, about 300 g/L calcium, about 20 mg/L strontium, about 2 mg/L boron, less than 5 mg/L iron, manganese, zinc, less than 9 mg/L silica, about 125 mg/L sulfate, about 5 g/L total dissolved solids and having an oxidation reduction potential, ORP, of about -200 mv, and a pH of about 6.

Exemplary embodiments of the present invention include treated brine compositions. In certain embodiments, the composition is a treated brine comprising less than 9 mg/L silica, less than 5 mg/L iron, and 50 mg/L to 225 mg/L lithium. In certain preferred embodiments, the composition is a treated brine comprising less than 5 mg/L silica, less than 5 mg/L iron, and about 180 mg/L lithium.

Other exemplary embodiments of the present invention include treated brine compositions. In certain embodiments, the composition is a treated brine comprising less than 5 mg/L silica, less than 5 mg/L iron and 50 to 225 mg/L lithium. In certain preferred embodiments, the composition is a treated brine comprising less than 5 mg/L silica, less than 5 mg/L iron, and about 180 mg/L of lithium.

In certain embodiments the composition is a treated brine comprising less than 45 g/L sodium, less than 8 g/L potassium, less than 5 mg/L magnesium, less than 16 g/L calcium, less than 700 mg/L strontium, less than 80 mg/L boron, less than 5 mg/L iron, less than 5 mg/L manganese, less than 5 mg/L zinc, less than 9 mg/L silica, more than 80 mg/L sulfate, 50 and 200 g/L total dissolved solids(TDS), and between 50 and 225 mg/L lithium, having a pH of between 4.5 and 8.5.

In certain other embodiments the composition is a treated brine comprising less than 45 g/L sodium, less than 8 g/L potassium, less than 5 mg/L magnesium, less than 16 g/L calcium, less than 700 mg/L strontium, less than 80 mg/L boron, less than 5 mg/L iron, less than 5 mg/L manganese, less than 5 mg/L zinc, less than 5 mg/L silica, more than 80 mg/L sulfate, 50 and 200 g/L total dissolved solids (TDS), and between 50 and 225 mg/L lithium, having a pH of between 4.5 and 8.5.

In certain preferred embodiments the composition is a treated brine comprising about 30 g/L sodium, 4 g/L potassium, less than 5 mg/L magnesium, about 8 g/L calcium, about 400 mg/L strontium, about 40 mg/L boron, a concentration of less than 5 mg/L iron, a concentration of manganese of less than 5 mg/L, less than 5 mg/L zinc, less than 9 mg/L silica, about 125 mg/L sulfate, about 110 g/L total dissolved solids (TDS) and about 190 mg/L lithium, having a pH of about 6.

In certain preferred embodiments the composition is a treated brine comprising about 30 g/L sodium, 4 g/L potassium, less than 5 mg/L magnesium, about 8 g/L calcium, about 400 mg/L strontium, about 40 mg/L boron, a concentration of less than 5 mg/L iron, a concentration of manganese of less than 5 mg/L, less than 5 mg/L zinc, less than 5 mg/L silica, about 125 mg/L sulfate, about 110 g/L total dissolved solids (TDS) and about 190 mg/L lithium, having a pH of about 6.

In other preferred embodiments the composition is a treated brine comprising more than 50 mg/L, but less than 225 mg/L lithium, less than 45 g/L sodium, less than 8 g/L potassium, less than 5 mg/L magnesium, less than 16 g/L calcium, less than 700 mg/L strontium, less than 80 mg/L boron, less than 5 mg/L iron, manganese, zinc, less than 9 mg/L silica, more than 90 mg/L sulfate, having a total dissolved solids of more than 50 g/L but less than 200 g/L.

In other preferred embodiments the composition is a treated brine comprising more than 50 mg/L, but less than 225 mg/L lithium, less than 45 g/L sodium, less than 8 g/L potassium, less than 5 mg/L magnesium, less than16 g/L calcium, less than 700 mg/L strontium, less than 80 mg/L boron, less than 5 mg/L iron, manganese, zinc, less than 5 mg/L silica, more than 90 mg/L sulfate, having a total dissolved solids of more than 50 g/L but less than 200 g/L.

In still other preferred embodiments the composition is a treated brine comprising about 190 mg/L lithium, 30 g/L sodium, 4 g/L potassium, 100 mg/L, magnesium, 8 g/L calcium, 400 mg/L strontium, 40 mg/L boron, less than 5 mg/L iron, less than 5 mg/L manganese, less than 5 mg/L zinc, less than 9 mg/L silica, about 125 mg/L sulfate, having a pH of about 6.0, ORP of about -200 mv, and total dissolved solids of about 110 g/L.

In still other preferred embodiments, the composition is a treated brine comprising about 190 mg/L lithium, 30 g/L sodium, 4 g/L potassium, 100 mg/L, magnesium, 8 g/L calcium, 400 mg/L strontium, 40 mg/L boron, less than 5 mg/L iron, less than 5 mg/L manganese, less than 5 mg/L zinc, less than 5 mg/L silica, about 125 mg/L sulfate, having a pH of about 6.0, having an oxidation reduction potential, ORP, of about -200 mv, and total dissolved solids of about 110 g/L.

In some embodiments the composition is a lithium depleted brine comprising more than 1 mg/L, but less than 30 mg/L lithium, less than 65 g/L sodium, less than 8 g/L potassium, less than 30 mg/L magnesium, less than16 g/L calcium, less than 700 mg/L strontium, less than 80 mg/L boron, more than 90 mg/L sulfate, having a total dissolved solids of more than 50 g/L but less than 200 g/L.

In other preferred embodiments the composition is a lithium depleted brine comprising about 19 mg/L lithium, about 30 g/L sodium, about 4 g/L potassium, less than 5 mg/L magnesium, about 8 g/L calcium, about 400 mg/L strontium, about 40 mg/L boron, less than 5 mg/L iron, less than 5 mg/L manganese, less than 5 mg/L zinc, less than 9 mg/L silica, about 125 mg/L sulfate, about 110 g/L total dissolved solids, having an ORP of about -200 mv, and having a pH of about 6.

In other preferred embodiments, the composition is a lithium depleted brine comprising about 19 mg/L lithium, about 30 g/L sodium, about 4 g/L potassium, less than 5 mg/L magnesium, about 8 g/L calcium, about 400 mg/L strontium, about 40 mg/L boron, less than 5 mg/L iron, less than 5 mg/L manganese, less than 5 mg/L zinc, less than 5 mg/L silica, about 125 mg/L sulfate, about 110 g/L total dissolved solids, having an oxidation reduction potential, ORP, of about - 200 mv, and having a pH of about 6.

In some embodiments the composition is a treated lithium depleted brine comprising more than 150 mg/L, but less than 225 mg/L lithium, less than 45 g/L sodium, less than 8 g/L potassium, less than 200 mg/L magnesium, less than16 g/L calcium, less than 700 mg/L strontium, less than 80 mg/L boron, more than 90 mg/L sulfate, having a total dissolved solids of more than 50 g/L but less than 200 g/L.

In some embodiments the composition is a treated lithium depleted brine comprising about 19 mg/L lithium, about 30 g/L sodium, about 4 g/L potassium, less than 5 mg/L magnesium, about 8 g/L calcium, about 400 mg/L strontium, about 40 mg/L boron, less than 5 mg/L iron, less than 5 mg/L manganese, less than 5 mg/L zinc, less than 9 mg/L silica, about 125 mg/L sulfate, about 110 g/L total dissolved solids, having an oxidation reduction potential, ORP, of about -200 mv, and having a pH of about 6.

In some embodiments, the composition is a treated lithium depleted brine comprising about 19 mg/L lithium, about 30 g/L sodium, about 4 g/L potassium, less than 5 mg/L magnesium, about 8 g/L calcium, about 400 mg/L strontium, about 40 mg/L boron, less than 5 mg/L iron, less than 5 mg/L manganese, less than 5 mg/L zinc, less than 5 mg/L silica, about 125 mg/L sulfate, about 110 g/L total dissolved solids, having an oxidation reduction potential, ORP, of about -200 mv, and having a pH of about 6.

In other embodiments, the composition is a lithium enriched brine comprising more than 600 mg/L, but less than 2000 mg/L lithium, more than 50 mg/L but less than 1200 mg/L sodium, more than 10 mg/L, but less than 200 mg/L potassium, less than 200 mg/L magnesium, more than 100 mg/L, but less than 600 g/L calcium, more than 5 mg/L, but less than 40 mg/L strontium, less than 10 mg/L boron, iron, manganese, and zinc, less than 20 mg/L silica, more than 90 mg/L sulfate, less than 10 g/L total dissolved solids, and having an oxidation reduction potential, ORP, of less than 0.

In still other embodiments the composition is a lithium enriched brine comprising about 800 mg/L lithium, 600 g/L sodium, 100 g/L potassium, less than 2 mg/L magnesium, about 300 g/L calcium, about 20 mg/L strontium, about 2 mg/L boron, less than 5 mg/L iron, manganese, zinc, less than 9 mg/L silica, about 125 mg/L sulfate, about 5 g/L total dissolved solids and having an oxidation reduction potential, ORP, of about -200 mv, and a pH of about 6.

In still other embodiments, the composition is a lithium enriched brine comprising about 800 mg/L lithium, 600 g/L sodium, 100 g/L potassium, less than 2 mg/L magnesium, about 300 g/L calcium, about 20 mg/L strontium, about 2 mg/L boron, less than 5 mg/L iron, manganese, zinc, less than 5 mg/L silica, about 125 mg/L sulfate, about 5 g/L total dissolved solidsand having an oxidation reduction potential, ORP, of about -200 mv, and a pH of about 6.

These and other aspects of the invention will be apparent from and elucidated with reference to the embodiment(s) described hereinafter. In the following drawings
- Figure 1: shows a schematic illustration of a system for extracting lithium or lithium salts from a brine according to the present invention;
- Figure 2: shows a schematic illustration of the lithium extraction process in case of a geothermal brine;
- Figure 3: shows a schematic illustration of a method according the present invention;
- Figure 4: shows a comparison of typical compositions of high-energy brines (such as from the Salton Sea region) vs. low-energy brines (such as from the Upper Rhine Valley region);

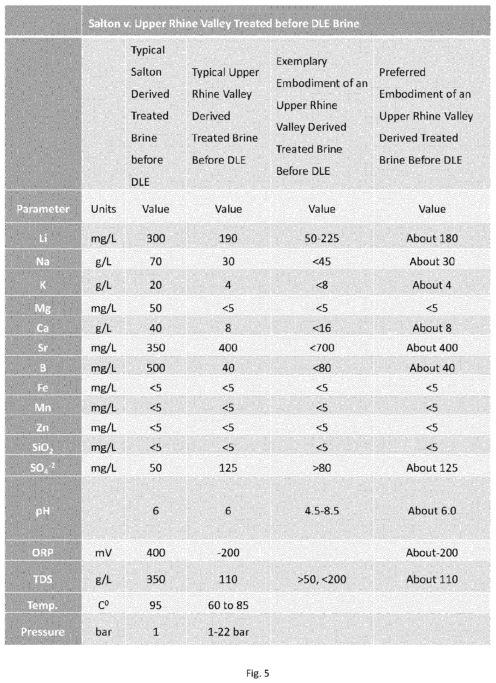

- Figure 5: shows a comparison of typical compositions of pre-lithium extraction treated high-energy brines (such as from the Salton Sea region) vs. pre-lithium extraction treated low-energy brines (such as from the Upper Rhine Valley region);
- Figure 6: shows a comparison of typical compositions of post-lithium extraction high-energy brines (such as from the Salton Sea region) vs. post-lithium extraction low-energy brines (such as from the Upper Rhine Valley region);
- Figure 7: shows a comparison of typical compositions of treated post-lithium extraction high-energy brines (such as from the Salton Sea region) vs. treated post-lithium extraction low-energy brines (such as from the Upper Rhine Valley region);
- Figure 8: shows a comparison of typical compositions of lithium enriched high-energy brines (such as from the Salton Sea region) vs. lithium enriched low-energy brines (such as from the Upper Rhine Valley region); and

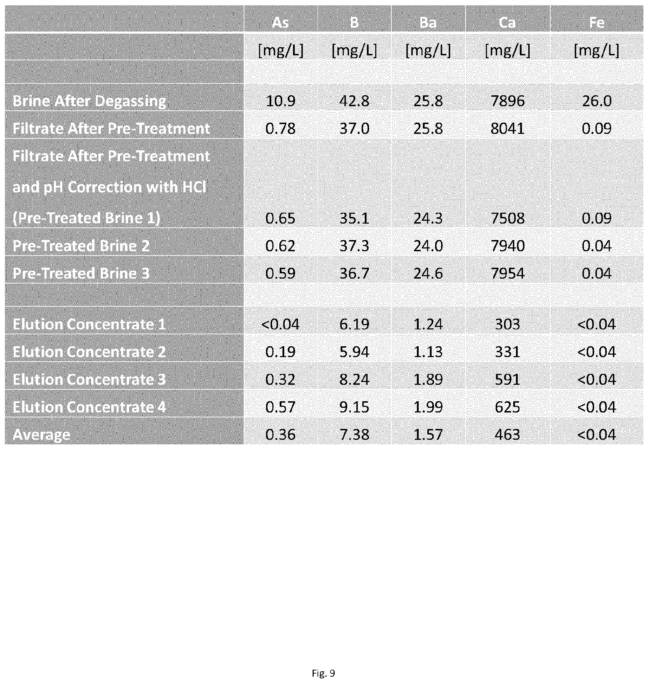

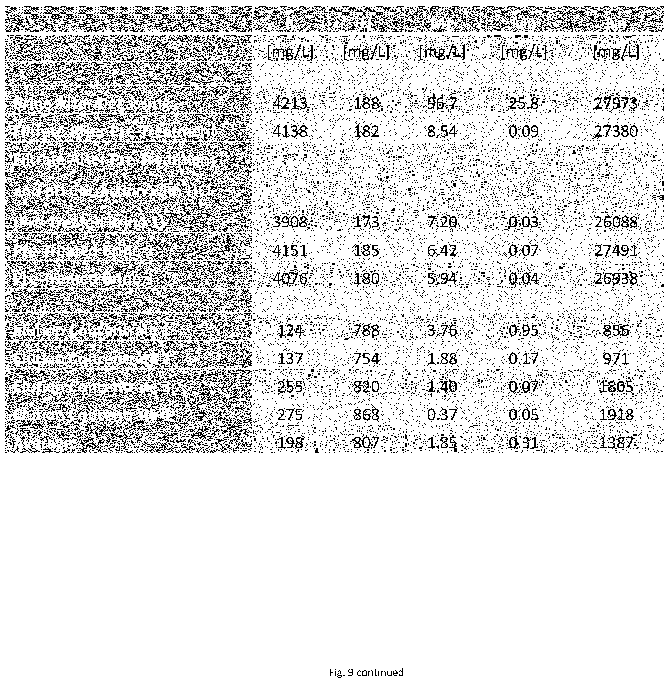

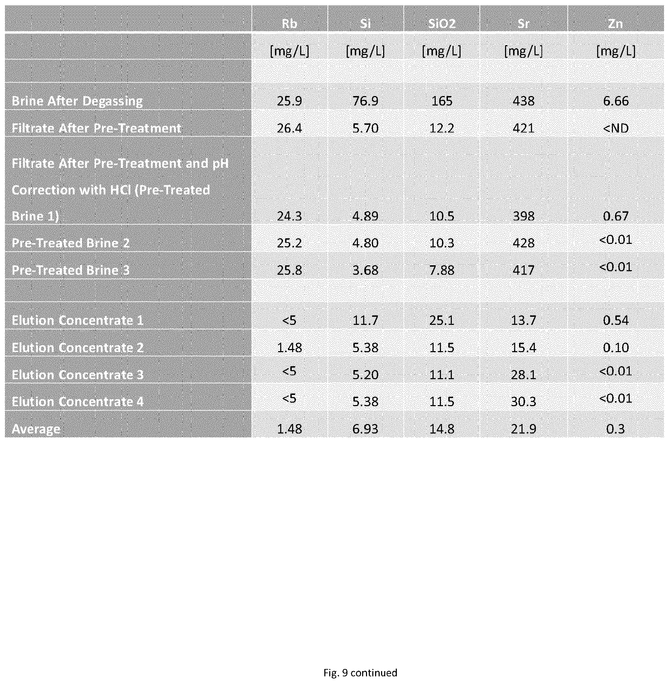

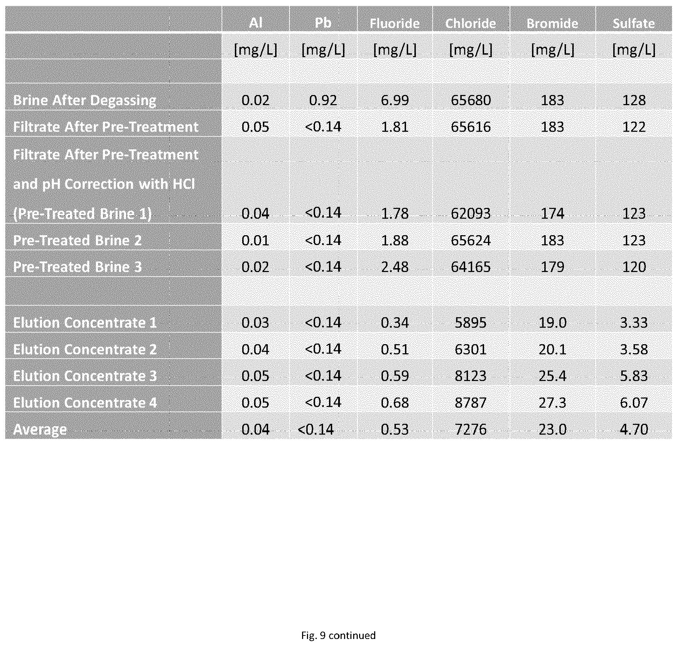

- Figure 9: shows compositions of process streams from pilot plant studies of the processes of the system method and compositions of the present invention.

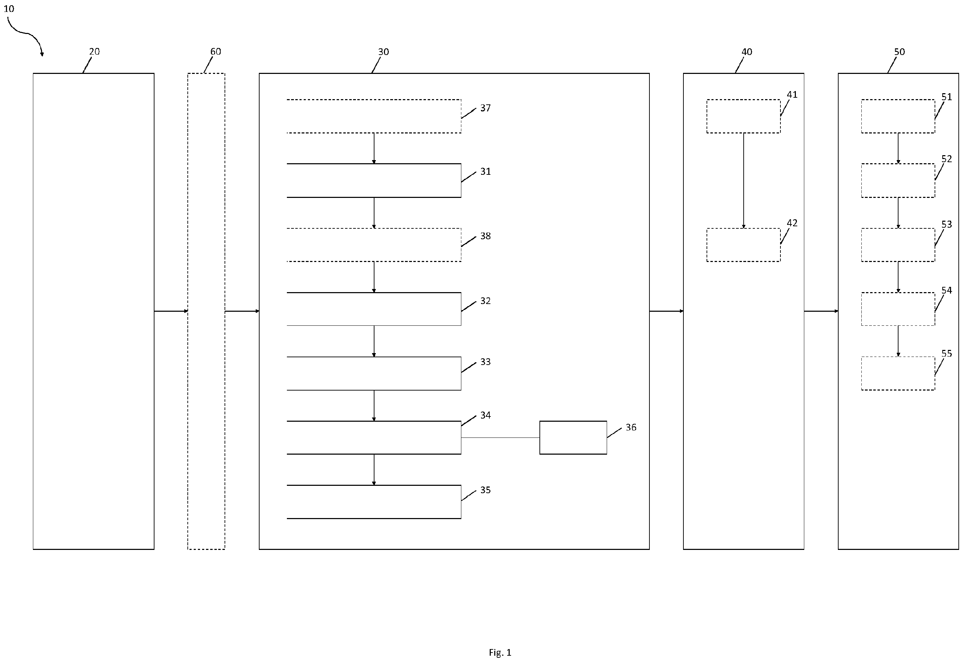

In Fig. 1 a system 10 for extracting lithium or lithium salts from a brine is schematically illustrated. The system 10 includes a feed circuit 20, a pre-treatment circuit 30, a direct lithium extraction circuit 40 and a post-treatment circuit 50. In the illustrated embodiment, the system 10 further includes an (optional) injection circuit 60 for adding anti-scale and corrosion inhibitors.

In particular, the system 10 of the present invention is suitable for extracting lithium or lithium salts from a geothermal brine. The geothermal brine is received from a geothermal power plant via the feed circuit 20. For this, the feed circuit 20 may be connected to a geothermal power plant that supplies the low-energy geothermal brine.

The brine may initially be processed in the injection circuit 60, in which anti-scale and corrosion inhibitors are added to the brine.

In the pre-treatment circuit 30 carbon dioxide, silica and transition metals are removed from the brine to obtain a treated brine. Herein, relevant transition metals particularly include: Fe, Mn, Zn. In addition Pb, As and Sb can be removed. For this, the pre-treatment circuit 30 includes a first pH modification unit 31, a depressurization unit 32, a second pH modification unit 33, a precipitate filter 34 and third pH modification unit 35. The precipitate filter 34 is connected to a precipitation tank 36. In the illustrated embodiment the pre-treatment circuit 30 further includes an inhibitor unit 37 and a stripping unit 38. Thereby inhibitor unit 37 and stripping unit 38 are optional. The brine passes through the different units of the pre-treatment circuit 30 and undergoes various pH modifications. In particular, the first pH modification unit 31 may be configured to add acid, in particular hydrochloric acid, to the brine. The second pH modification unit 33 may be configured to add calcium hydroxide to the brine and the third pH modification unit 35 may be configured to add acid to the brine. Bases other than calcium hydroxide could be used, particularly but not exclusively sodium hydroxide and potassium hydroxide. In the depressurization unit the pressure of the brine is reduced. In the precipitation tank 36 the brine rests for 5 to 30 minutes and is preferably mixed with an additive.

The direct lithium extraction circuit 40 is configured to extract a lithium enriched brine as well as a lithium depleted brine from the treated brine. In other words, the product or eluate stream is separated from the treated brine. For this, the direct lithium extraction circuit 40 may particularly include a holding unit 41 and/or an eluate extraction unit 42. The holding unit 41 holds a sorbent material for extracting the lithium or lithium salts from the treated brine. The eluate extraction unit 42 then removes the lithium or lithium salts from the sorbent material.

In the post-treatment circuit 50 the previously removed precipitate is redissolved and added to the lithium depleted brine so that the lithium depleted brine can be reinjected into the geothermal reservoir. For this, the post-treatment circuit 50 may particularly include a dissolving unit 51 for redissolving the precipitate and an addition unit 52 for adding the dissolved precipitate to the lithium depleted brine. Furthermore, the post-treatment circuit 50 may include a scavenging unit 53 for removing oxygen from the lithium depleted brine, a fourth pH modification unit 54 for modifying the pH of the lithium depleted brine and a repressurization unit 55 for repressurizing the treated lithium depleted brine.

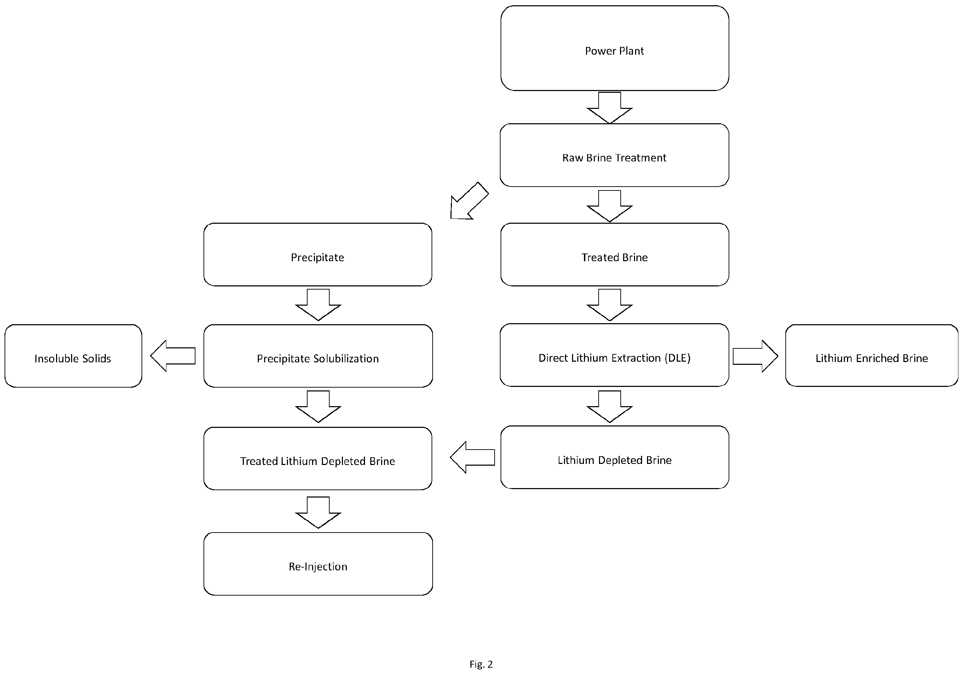

Fig. 2 schematically illustrates the process and composition flow of the system of the present invention in a preferred embodiment. The raw brine is received from the power plant and processed in the pre-treatment circuit to separate the precipitate from the treated brine. The treated brine is then further processed in a direct lithium extraction circuit to obtain the lithium enriched brine as well as the lithium depleted brine. In the illustrated process in Fig. 2 the precipitate is further processed to remove insoluble solids. Then the precipitate is redissolved and combined with a lithium depleted brine to obtain the treated lithium depleted brine that can then be reinjected into the geothermal reservoir.

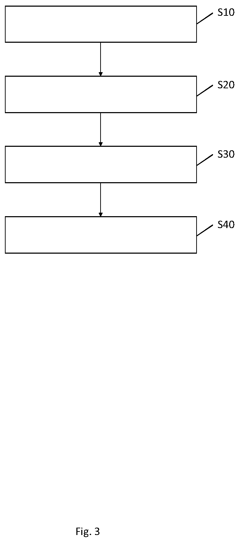

Fig. 3 schematically illustrates a method according to an aspect of the present invention. The method includes the basic steps of receiving S10 the brine, removing S20 carbon dioxide, silica and transition metals from the brine, extracting S30 lithium or lithium salts from the treated brine and resolving S40 at least part of the precipitate and adding it to the lithium depleted brine.

In particular, a lithium extraction process at a geothermal plant consists of three process steps after having received the brine: 1. pre-treatment to modify the brine in such a way that it can be supplied to the direct lithium extraction (DLE) without damaging the sorbent material, 2. the DLE in sequenced columns yielding an eluate with Li concentrations up to 500 mg/L, and 3. the post-treatment to return the depleted brine after the DLE to its original conditions.

The entire geothermal brine system in the geothermal power plant is preferably operated under complete atmospheric isolation to prevent any oxygen from entering. The following lists presents the process design basis. The lists comprise the most important parameters and are by no means comprehensive.

Feed: salinity of brine feed: 110-130 g/L; pH of brine feed: 5.2-5.5; lithium content of brine feed: 150-200 mg/L; maximum temperature and pressure of brine at the injection pipeline: 65-85 °C, 18-22 bar(a).

Design parameters: operating/design pressure: 20 bar(a), 29 bar(a) for the section of the plant where tests with original, unmodified brine (i.e. without pre-treatment) will be performed; operating/design pressure: 1 bar(a) for all other sections of the plant; operating/design temperature: 65-85/95 °C.

Preferably, oxygen ingress into the brine is avoided. Levels should remain below 5 ppb at the reinjection well. Various measures taken: (1) steel or oxygen tight plastic material for all equipment and piping, (2) removal of oxygen with an oxygen scavenger (such as sodium bisulfite, sodium/potassium metabisulfite) prior to reinjection.

The goal of brine pre-treatment is to remove carbon dioxide, silica and heavy metals (transition metals) from the brine prior to supplying it to the DLE columns.

The brine from the geothermal plant enters the plant after leaving the Organic Rankine Cycle (ORC) section. At the outlet of the ORC, the brine has a temperature of about 65-85°C.

First, an BaSO₄ scale inhibitor is injected to prevent BaSO₄ from scaling inside the plant, not even during lime precipitation (see below). Inhibitor concentration in the brine 3-10 mg/L, better 3-5, best 3 mg/L.

In the first stage of the pre-treatment, the pressure of the brine is let down from about 18-22 bar to approximately ambient pressure via a pressure regulation valve and a downstream needle valve. This pressure relief releases parts of the dissolved gases (mainly CO₂, CH₄, N₂) from the brine. To avoid scaling in the valves and the downstream flash drum, 1 molar hydrochloric acid is added right before depressurization -> pH of 4-5, better 5. Acidification of the brine not only prevents the precipitation of calcium carbonate but also shifts the carbonate-bicarbonate equilibrium to the CO₂ side.

It has been shown that approximately 0.6-0.9 g/L carbon dioxide remain dissolved in the brine after pressure relief. About half of this amount can be removed by subsequent stripping with nitrogen, steam or vacuum in a packed-bad column.

The off-gas is preferably collected in a separate gas line, compressed and reinjected into the underground several hundred meters deep, where it is absorbed into the geothermal brine stream and returned to the reservoir, where it originally came from.

To remove the remaining CO₂ from the brine, lime milk is added to remove CO₂ as CaCO₃. A positive side effect of the lime milk precipitation is that most transition metal ions (including heavy metals) precipitate as hydroxide salts and silica is precipitated as silicates. Laboratory tests showed that at pH of 9 to 11, better 9 to 10.5, preferably about 10, CaCO₃ and metal hydroxides precipitate almost completely. Lime solution with a concentration of 20 wt-% Ca(OH)₂ can be used.

It is important to allow for sufficient residence time (5-20 minutes) and good mixing to make sure dissolved or colloidal silica reacts completely in the precipitation tanks. Another measure is to use a tank cascade with the lime feed being divided to all tanks. All this will help to avoid unprecipitated silica, iron and manganese and undissolved Ca(OH)₂ being found in the precipitates and ultimately in the filter slurry/cake.

The brine solution with the precipitates passes through a filter to remove the precipitates. Particle size of the precipitates is in the range of 1-100 µm.

Assuming very fine particles with sizes in the order of 20 to 40 microns, a self-cleaning candle filter can be used.

Before feeding the pre-treated brine to the DLE circuit, the pH is adjusted for optimal performance and lifetime of the sorbent. The manufacturers of the sorbent suggest the pH to be between 5.0 and 6.5. Therefore, hydrochloric acid is added to lower the pH after the lime precipitation accordingly.

The fully pre-treated brine is supplied to the DLE circuit. After passing through a small filter to remove last remaining fine particles generated potentially after the pH adjustment, the brine enters the DLE columns.

For example, a fully automated set-up with four columns can be used. The bed porosity of the sorbent material is preferably in the order of 0.35 to 0.4.

The valves required for the connection of the individual DLE columns at the inlets and outlets are not shown in the process flow diagram of Fig. 2. They will be operated fully automated following a sequence of loading two or three columns in series, while the third or fourth is stripped of the lithium, with different cuts being sent to different tanks.

The brine feed to the DLE flows either from top to bottom or the other way around through the columns. It has been shown that the lithium concentration in the spent brine leaving the column is in the order of 5-20 mg/L lithium, therefore, over 94-95 % of the lithium is removed.

For the lithium stripping step in the fourth column a LiCI solution with 0 to 500 mg/L lithium strip solution is used as an eluent. During desorption, the flow direction of the strip solution is downwards. The flow rate of the strip solution is in the order of 1-10 BV/h. By using three different outlet lines, the first two cuts of the eluate (displaced brine and mixed strip brine leaving the column) are discarded. The third cut constitutes the lithium rich product solution with high lithium concentration (up to 600-1500 mg/L Li) and only small amounts of other ions. This cut will be collected in IBCs for analysis and further processing at a third partner to convert the LiCI to lithium hydroxide monohydrate (LHM). The fourth cut is collected and used to produce strip solution for the subsequent regeneration step by adding make-up water.

The goal of post-treatment is to return the spent brine as close as possible to its original state. Therefore, the heavy metal precipitates from the pre-treatment are dissolved by adding concentrated hydrochloric acid (32 wt-%). HCI is added until a pH of 2-3 is reached. Only trace amounts of insoluble SiO₂ and CaF₂ will remain. The pH is increased again by adding a base, such as NaOH, LiOH, until the pH of the original brine has been reached. Subsequently, the solids are removed from the solution by filtration and are disposed. This flow is added to the Li-depleted brine (spent brine) leaving the DLE and is reinjected into the underground reservoir.

The LiCI eluate product still contains trace amounts of impurities, mainly the chlorides of Na, K, Ca, Mg and some boron components. These must be removed to a large extent before the LiCI product solution can be sent to the electrolysis process step.

The purification and concentration consist of the following steps: 1. RO to increase the overall salt concentration and to recycle back water; 2. Ca, Mg precipitation with soda ash and NaOH or LiOH; 3. Filtration; 4. IX for Ca, Mg removal down to ppb levels; 5. Boron removal via IX; and 6. Evaporation and crystallization for NaCI/KCI removal.

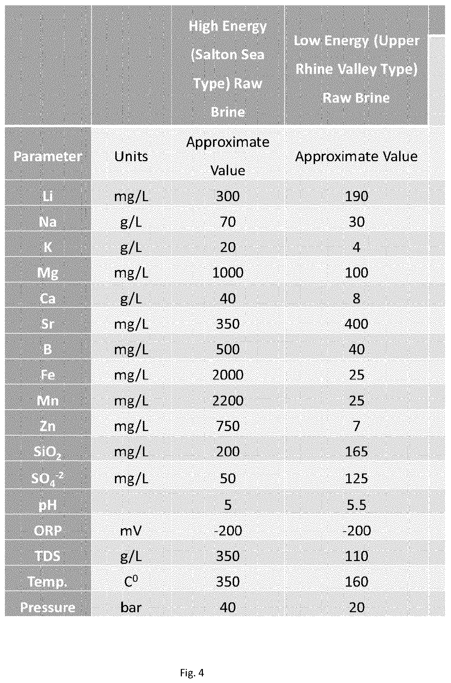

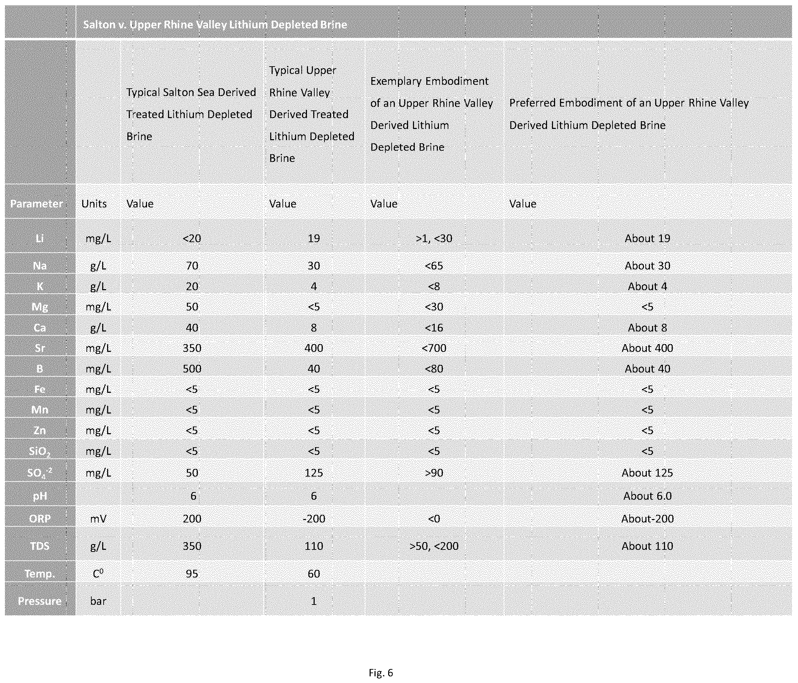

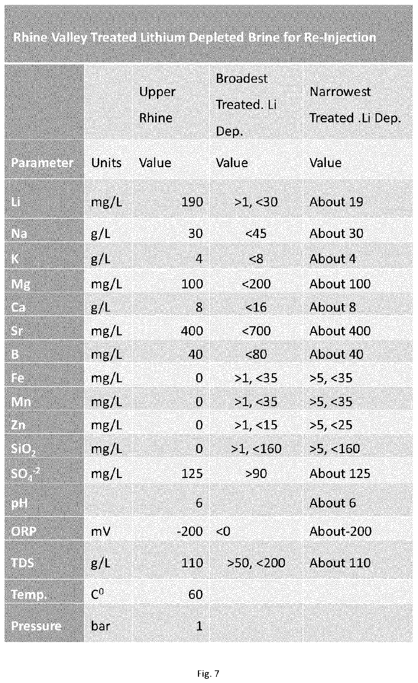

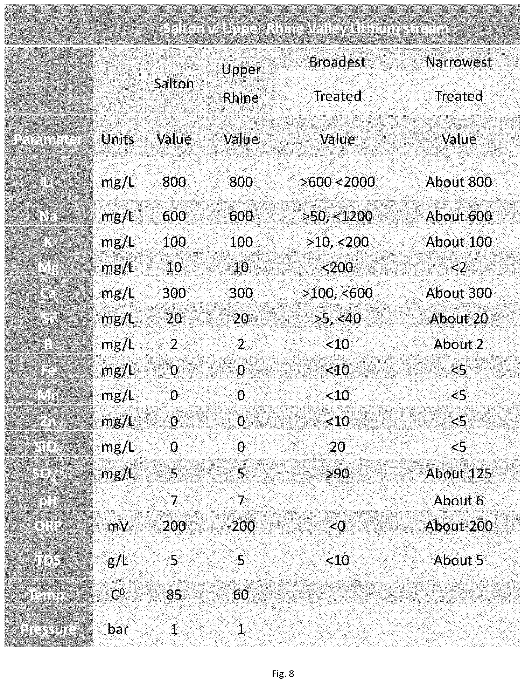

Fig. 4 shows the compositions of a typical high-energy raw brine, such as one that may be found in the Salton Sea region, and a low-energy raw brine, such as may be found in the Upper Rhine Valley region. As described herein, the present technologies provide for several types of low-energy geothermal brine derived compositions. Raw low-energy geothermal brines are brines that exit the well borehole at a temperature of less than or equal 255°C that have yet to be treated to alter their composition. As described herein, a treated low-energy brine composition has been treated to reduce the concentrations of various minerals, especially iron and silica, but also optionally including manganese and zinc, depending on the particular source of the low-energy raw brine. Treated brine compositions have not been subject to lithium extraction. After treatment, the treated compositions are subject to direct lithium extraction and provide a lithium depleted brine composition, such as those described in Fig. 6, and a lithium enriched brine composition as described in Fig. 8. During processing, precipitates from the treatment of the low-energy raw brine may be solubilized, and the resulting solution combined with the lithium depleted brine composition to provide a treated lithium depleted brine composition for reinjection into the well, as described in Fig. 7.

Example 1: Removal of Silica and Transition Metals Using Base - process for providing a treated brine: A brine exiting an Organic Rankine Cycle (ORC) geothermal energy plant in the Upper Rhine Valley was depressurized after it left the geothermal energy plant (Brine After Degassing). The brine had an approximate composition of about 180 mg/L lithium, 28,000 mg/L sodium, 8,000 mg/L calcium, 165 mg/L silica, 25 mg/L manganese, 25 mg/L iron, and 7 mg/L zinc. A calcium hydroxide slurry having 20 % solids by weight in deoxygenated water was added continuously in a continuous stirred tank reactor to raise the pH to 10.0. The pH was monitored throughout the reaction using a pH meter. The total residence time in the reactor was about 30 minutes. A white precipitate was collected using a filter. The filtrate brine leaving the filter had an approximate composition of about 180 mg/L lithium, 28,000 mg/L sodium, 8,000 mg/L calcium, 8 mg/L silica, 0.1 mg/L manganese, 0.1 mg/L iron, and 0.1 mg/L zinc (Filtrate After Pre-Treatment). The filtrate brine with silica and transition metals removed was then acidified using 2-3 wt-% hydrochloric acid to reduce the pH to 5.5 (Pre-Treated Brine 1). This brine was then conveyed to a lithium extraction process.

Example 2: Selective Extraction of Lithium Chloride - process for providing a lithium enriched brine, and a lithium depleted brine: A brine with an approximate composition of about 180 mg/L lithium, 28,000 mg/L sodium, 8,000 mg/L calcium, 8 mg/L silica, 0.1 mg/L manganese, 0.1 mg/L iron, and 0.1 mg/L zinc and pH 5.5 (Pre-Treated Brine 1) was conveyed to a direct lithium extraction process to remove the lithium chloride from the brine. The direct lithium extraction process consisted of a 1L column of aluminate adsorption resin materials which selectively extracted around 95 % of the lithium chloride from the brine. After contact with the brine for 4 hours, the resin materials were separated from the brine and water containing 100 mg/L lithium as lithium chloride was contacted with the resin materials to remove most of the lithium chloride captured by the resin materials. This created a new product solution with an approximate composition of about 800 mg/L lithium, 800 mg/L sodium, 400 mg/L calcium, 0 mg/L silica, 0 mg/L manganese, 0 mg/L iron, and 0 mg/L zinc (brine 6). This solution was used to produce lithium hydroxide monohydrate via a series of purification, upgrading, and conversion chemical processes.

Example 3: Brine Chemistry Modification for Reinjection - process for treating a lithium depleted brine: A brine separated from the aluminate adsorption resin materials which had most of its lithium chloride removed with an approximate composition of about 20 mg/L lithium, 28,000 mg/L sodium, 8,000 mg/L calcium, 8 mg/L silica, 0.1 mg/L manganese, 0.1 mg/L iron, and 0.1 mg/L zinc was transferred to another continuous stirred tank reactor. The white precipitates produced in Example 1 were acidified using 30 % hydrochloric acid in a separate continuous stirred tank reactor to redissolve most of the transition metals. The silica and silicates in the white material which did not dissolve were filtered from this dissolved precipitate solution and the filtrate from this separation was combined with the previously described brine which had its lithium chloride removed. This combined brine was then repressurized and reinjected into the Upper Rhine Valley geothermal brine aquifer.

As used herein, "brine" or "brine solution" can particularly refer to any aqueous solution that contains a substantial amount of dissolved metals, such as alkali and/or alkaline earth metal salt(s) in water, wherein the concentration of salts can vary from trace amounts up to the point of saturation. Generally, brines suitable for the methods described herein are aqueous solutions that may include alkali or alkaline earth metal chlorides, bromides, sulfates, hydroxides, nitrates, and the like, as well as natural brines. In certain brines, other metals like lead, manganese and zinc may be present. Exemplary elements present in the brines can include sodium, potassium, calcium, magnesium, lithium, strontium, barium, iron, boron, silica, manganese, chlorine, zinc, aluminum, antimony, chromium, cobalt, copper, lead, arsenic, mercury, molybdenum, nickel, silver, thallium, vanadium, and fluorine, although it is understood that other elements and compounds may also be present. Brines can be obtained from natural sources, such as Chilean brines or Salton Sea brines, geothermal brines, Smackover brines, sea water, mineral brines (e.g. lithium chloride or potassium chloride brines), alkali metal salt brines, and industrial brines, for example, industrial brines recovered from ore leaching, mineral dressing, and the like. The present invention is also equally applicable to artificially prepared brine or salt solutions. Brines include continental brine deposits, geothermal brines, and waste or byproduct streams from industrial processes, smackover brines, synthetic brines, and other brines resulting from oil and gas production. In some embodiments, the brines are brines from which energy has already been extracted. For instance, brines used herein include brines from which a power plant has already extracted energy through methods such as flashing. In some preferred embodiments, the present invention is particularly suited to low-energy brines, such as those, but not limited to brines derived from the Upper Rhine Valley regions.

In still other preferred embodiments, the present invention is particularly suited to high-energy brines that have been processed to lower their temperature but that still comprise levels of minerals, especially iron, silica, zinc, and/or manganese that make them poor feedstocks for direct lithium extraction technologies.

The term "geothermal brine" can particularly refer to a saline solution that has circulated through the crustal rocks in areas of high heat flow and has become enriched in substances leached from those rocks. Geothermal brines, such as those found in the Salton Sea geothermal fields, can include many dissolved metal salts, including alkali, alkaline earth, and transition metal salts.

The term "Salton Sea brine" can particularly refer to geothermal brines obtained from the geothermal fields in San Diego County, Imperial County, and Riverside County in California, USA.

The term "Upper Rhine Valley brine" can particularly refer to geothermal brines obtained from the valley that the Rhine River runs through. This area encompasses parts of France, the Alsace region, Germany, the Southern Palatinate and Black Forest regions, and Switzerland's Basel region. Upper Rhine Valley brines may also originate in the Rhine Rift Valley or Upper Rhine Graben. The present technology is also applicable to brines other than those obtained from the Upper Rhine Valley regions as well, if those brines share a similar chemical composition to the low-energy brines described herein.

The term "high-energy brine" can particularly refer to geothermal brines exiting the borehole at more than 255°C. Salton Sea or Salton Sea derived brines usually have this characteristic.

The term "low-energy brine" can particularly refer to geothermal brines exiting the borehole at or below 255°C. Upper Rhine Valley brines or Upper Rhine Valley derived brines usually have this characteristic.

The term "concentrated" in reference to a brine (e.g. "concentrated brine" or "concentrated geothermal brine") can particularly refer to brines that have reduced water content compared to the original brine. The reduced water content brine may be subsequently diluted post-concentration to prevent salt precipitation. In some embodiments, concentrated brines can result from evaporative processes.

The term "synthetic brine" can particularly refer to a brine that has been prepared such that it simulates a naturally occurring brine. For instance, a synthetic brine can be prepared in an attempt to simulate the brine composition of various geothermal brine reservoirs found in the Salton Sea region (Calif., USA), Upper Rhine Valley, or other regions. For example, a synthetic brine simulating a Salton Sea geothermal brine has a composition of about 280 mg/L lithium, 63,000 mg/L sodium, 20,000 mg/L potassium, 33,000 mg/L calcium, 130 mg/L strontium, 700 mg/L zinc, 1700 mg/L iron, 450 mg/L boron, 50 mg/L sulfate, 3 mg/L fluoride, 450 mg/L ammonium ion, 180 mg/L barium, 160-mg/L silica (reported as SiO2), and 180,000 mg/L chloride. Additional elements, such as manganese, aluminum, antimony, bromine, chromium, cobalt, copper, fluorine, lead, arsenic, mercury, molybdenum, nickel, silver, thallium, and vanadium, may also be present in the brine.

The term "lithium salts" can include lithium nitrates, lithium sulfates, lithium bicarbonate, lithium halides (particularly chlorides, bromides fluorides), and acid salts. For example, the Salton Sea brines have lithium chlorides.

As used herein, precipitates of iron oxides include iron oxides, iron hydroxides, iron oxide-hydroxides, and iron oxyhydroxides.

The term "raw brine" can particularly refer to a geothermal brine that has just exited the well borehole at its natural temperature, pressure and mineral composition before being subjected to any manipulation of its temperature, pressure or composition.

The term "depressurized raw brine" can particularly refer to a brine that exited a geothermal energy plant such as, but not limited to a Rankine Cycle geothermal energy plant and is at a lower temperature and pressure than the raw brine that enters such plant.

The term "treated brine" can particularly refer to a brine that has been processed to reduce its content of iron, silica (reported as SiO₂), manganese, and zinc to less than 5 mg/L.

The term "lithium depleted brine" can particularly refer to a treated brine that has been subject to a direct lithium extraction process and typically has a lithium content of more than 1 mg/L, but less than 50 mg/L.

The term "treated lithium depleted brine" can particularly refer to a lithium depleted brine to which the solubilized precipitates obtained from the initial iron, silica, manganese and zinc reduction process that provides a treated brine from a raw brine, have been added.

The term "lithium enriched brine" can particularly refer to the high lithium content from the direct lithium extraction process and this brine typically has a lithium content of more than 600 mg/L, but less than 2000 mg/L.

Further exemplary embodiments of the present invention include treated brine compositions. In certain embodiments, the composition is a treated brine comprising silica of less than 5 mg/L, iron of less than 5 mg/L and lithium from 50 to 225 mg/L. In certain preferred embodiments, the composition is a treated brine comprising less than 9 mg/L silica, less than 5 mg/L iron and about 190 mg/L lithium.

In other aspects, the invention provides methods of using the treated geothermal brine compositions described herein. For example and without limitations, the treated geothermal brine compositions can be supplied to a process for mineral extraction. For example and without limitations, the minerals that can be extracted selectively or in combination from the treated geothermal brine include manganese, potassium, rubidium, cesium, phosphates, lithium, and lead. Also disclosed are exemplary embodiments of methods of using the treated lithium depleted geothermal brine compositions described herein by injecting the treated geothermal brine compositions into a geothermal reservoir.

Typically, a raw, low-energy brine is fed into an Organic Rankine Cycle geothermal energy plant and allowed to depressurize to 1 bar of pressure as it exits. In one embodiment, this depressurized raw brine has an approximate composition of about 180 mg/L lithium, about 28,000 mg/L sodium, about 8,000 mg/L calcium, about 165 mg/L silica, about 25 mg/L manganese, about 25 mg/L iron, and about 7 mg/L zinc.

In another embodiment, the depressurized raw brine is treated with a base dissolved in deoxygenated water in a continuously stirred tank reactor to raise the pH of the mixture to a pH of about 10. In a preferred embodiment, the base is a slurry of calcium hydroxide. In another preferred embodiment, the base is a 10 %, 15 %, 20 %, 25 %, 30 %, or 35 % slurry of calcium hydroxide by weight in deoxygenated water. In another preferred embodiment, the base is a 20 %, slurry of calcium hydroxide by weight in deoxygenated water. In another preferred embodiment, the mixture is stirred for 5, 10, 15, 20, 25, 30, 35, 40, 50, 60, 90, 120, 180, or 240 minutes. In a preferred embodiment, the stirring is conducted for about 30 minutes. The precipitate that forms is removed by filtration to provide a filtrate with an approximate composition of about 180 mg/L lithium, about 28,000 mg/L sodium, about 8,000 mg/L calcium, about 8 mg/L silica, about 0.1 mg/L manganese, about 0.1 mg/L iron, and about 0.1 mg/L zinc. In some embodiments, the pH of filtrate obtained by this process is adjusted to about 5.5 using mineral acid to provide a treated brine. In a preferred embodiment, the mineral acid is hydrochloric acid. In another preferred embodiment, the mineral acid is aqueous hydrochloric acid. In another preferred embodiment, the mineral acid is 2-3 % by weight aqueous hydrochloric acid.

In some embodiments, the treated brine may be subject to direct lithium extraction (DLE, sometimes called "selective lithium extraction"). The treated brine obtained by the above described process, having an approximate composition of about 180 mg/L lithium, 28,000 mg/L sodium, 8,000 mg/L calcium, 8 mg/L silica, 0.1 mg/L manganese, 0.1 mg/L iron, 0.1 mg/L zinc, and pH 5.5, was contacted with a selective lithium adsorption material. In a preferred embodiment, the selective lithium adsorption material is an aluminate adsorption resin material, although other suitable lithium selective adsorption materials are known in the art and any of those materials may be used to recover lithium from the treated brines disclosed herein. In one embodiment, the lithium selective adsorption material may be situated in a flow-through column. In one embodiment, the total contact time between the treated brine and the lithium selective adsorption material may be about 30 minutes, about 1h, about 2h, about 3h, about 4h, about 5h, about 6h, about 8h, or about 12h. In a preferred embodiment, the contact time is about 4 h. The selective lithium adsorption material was then treated with an aqueous solution comprising 100 mg/L lithium chloride to provide a lithium enriched brine having an approximate composition of about 800 mg/L lithium, 800 mg/L sodium, 400 mg/L calcium, 0 mg/L silica, 0 mg/L manganese, 0 mg/L iron, and 0 mg/L zinc (Elution Concentrate 1). The lithium depleted brine that was separated from the first contact with the selective lithium adsorption material had an approximate composition of about 20 mg/L lithium, 28,000 mg/L sodium, 8,000 mg/L calcium, 8 mg/L silica, 0.1 mg/L manganese, 0.1 mg/L iron, and 0.1 mg/L zinc.

In one embodiment, the precipitate removed during the first treatment stage is acidified with 30 % aqueous hydrochloric acid in a continuously stirred reactor to redissolve most of the solids, the suspension is filtered, and the filtrate is added to the lithium depleted brine in a second continuously stirred reactor to provide a treated lithium depleted brine that may be pressurized and reinjected into a brine aquifer.

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, the description is intended to be illustrative, but not limiting the scope of the disclosure, as well as other claims. The disclosure, including any readily discernible variants of the teachings herein, defines, in part, the scope of the foregoing claim terminology such that no inventive subject-matter is dedicated to the public.

In the claims, the word "comprising" does not exclude other elements or steps, and the indefinite article "a" or "an" does not exclude a plurality. A single element, circuit or other unit may fulfill the functions of several items recited in the claims. The mere fact that certain measures are recited in mutually different dependent claims does not indicate that a combination of these measures cannot be used to advantage.

## Claims

1. System (10) for extracting lithium or lithium salts from a brine, comprising:
a feed circuit (20) for receiving the brine;
a pre-treatment circuit (30) for removing carbon dioxide, silica and transition metals from the brine to obtain a treated brine, said pre-treatment circuit including a first pH modification unit (31) configured to modify a pH of the brine to 4 to 5, preferably about 4.5, a depressurization unit (32) positioned downstream from the first pH modification unit configured to depressurize the brine to about atmospheric pressure, a second pH modification unit (33) positioned downstream from the depressurization unit configured to modify the pH of the brine to 9 to 11, preferably about 10, prior to resting the brine in a precipitation tank (36), a precipitate filter unit (34) positioned downstream from the second pH modification unit configured to remove a precipitate including the silica and the transition metals from the brine and a third pH modification unit (35) positioned downstream from the precipitate filter unit configured to modify the pH of the brine to 5 to 6 to obtain the treated brine;
a direct lithium extraction circuit (40) for extracting a lithium enriched brine comprising the lithium or lithium salts from the treated brine to obtain a lithium depleted brine; and
a post-treatment circuit (50) for redissolving at least part of the precipitate and adding it to the lithium depleted brine to obtain a treated lithium depleted brine for reinjection into a geothermal reservoir.

2. System (10) as claimed in claim 1, wherein
the first pH modification unit (31) is configured to add acid to the brine, in particular hydrochloric acid;
the second pH modification unit (33) is configured to add calcium hydroxide to the brine, in particular lime milk, said lime milk preferably having a concentration of 20 wt-% Ca(OH)₂; and/or
the third pH modification unit (35) is configured to add acid to the brine, in particular hydrochloric acid.

3. System (10) as claimed in any one of the preceding claims, wherein the depressurization unit (32) includes a pressure reducing valve and a downstream pressure regulating valve.

4. System (10) as claimed in any one of the preceding claims, wherein the precipitate filter unit (34)
includes a candle filter, in particular a self-cleaning candle filter; and/or
is configured to filter our particles with a size of 1-100 µm.

5. System (10) as claimed in any one of the preceding claims, wherein the pre-treatment circuit (30) includes
an inhibitor unit (37) positioned upstream from the first pH modification unit (31) configured to inject a BaSO₄ scale inhibitor into the brine, preferably to obtain a concentration of the BaSO₄ scale inhibitor of 3-10mg/l, preferably 3-5 mg/l; and/or
a stripping unit (38) positioned downstream from the first pH modification unit (31) configured to strip the brine with nitrogen, steam or vacuum.

6. System (10) as claimed in any one of the preceding claims, wherein the precipitation tank (36) is configured to rest the brine for 5 to 30 minutes and/or includes a mixer for mixing the brine with an additive.

7. System (10) as claimed in any one of the preceding claims, wherein
the direct lithium extraction circuit (40) includes a holding unit (41) for holding a sorbent material for extracting the lithium or lithium salts from the treated brine, said sorbent material preferably having a bed porosity of 0.35 to 0.4; and
the direct lithium extraction circuit (40) preferably includes an eluate extraction unit (42) configured to remove the lithium or lithium salts from the sorbent material by contacting the sorbent material with water.

8. System (10) as claimed in any one of the preceding claims, wherein
the post-treatment circuit (50) includes a dissolving unit (51) configured to dissolve the at least part of the precipitate and an addition unit (52) to add the dissolved precipitate to the lithium depleted brine; and
the dissolving unit is preferably configured to add concentrated hydrochloric acid, in particular concentrated hydrochloric acid with 32 wt-%, to the lithium depleted brine to obtain a pH of 2-3.

9. System (10) as claimed in any one of the preceding claims, wherein the post-treatment circuit (50) includes at least one of
a scavenging unit (53) for removing oxygen from the lithium depleted brine by means of an oxygen scavenger;
a fourth pH modification unit (54) for increasing the pH of the lithium depleted brine to correspond to the pH of the received brine, said fourth pH modification unit preferably being configured to add a base to the lithium depleted brine, in particular NaOH or LiOH; and
a repressurization unit (55) configured to repressurize the treated lithium depleted brine for reinjecting the brine into a geothermal reservoir.

10. System (10) as claimed in any one of the preceding claims, wherein the pre-treatment circuit (30) is configured to obtain a treated brine comprising more than 50 mg/L but less than 225 mg/L lithium, less than 45 g/L sodium, less than 8 g/L potassium, less than 10 mg/L magnesium, less than16 g/L calcium, less than 700 mg/L strontium, less than 80 mg/L boron, less than 5 mg/L of iron, manganese, zinc, less than 9 mg/L silica, more than 90 mg/L sulfate, having a total dissolved solids of more than 50 g/L but less than 200 g/L.

11. System (10) as claimed in any one of the preceding claims, wherein the direct lithium extraction circuit (40) is configured to obtain a lithium depleted brine comprising more than 0.001 mg/L but less than 30 mg/L lithium, less than 65 g/L sodium, less than 8 g/L potassium, less than 30 mg/L magnesium, less than16 g/L calcium, less than 700 mg/L strontium, less than 80 mg/L boron, more than 90 mg/L sulfate, having a total dissolved solids of more than 50 g/L but less than 200 g/L.

12. System (10) as claimed in any one of the preceding claims, wherein the post-treatment circuit (50) is configured to obtain a treated lithium depleted brine comprising more than 0.001 mg/L but less than 30 mg/L lithium, less than 45 g/L sodium, less than 8 g/L potassium, less than 200 mg/L magnesium, less than16 g/L calcium, less than 700 mg/L strontium, less than 80 mg/L boron, more than 1 mg/L but less than 35 mg/L iron, more than 1 mg/L but less than 35 mg/L manganese, more than 1 mg/L but less than 25 mg/L zinc and more than 1 mg/L but less than 160 mg/L silica, more than 90 mg/L sulfate, more than 50 g/L but less than 200 g/L total dissolved solids.

13. System (10) as claimed in any one of the preceding claims, wherein the direct lithium extraction circuit (40) is configured to extract from the treated brine a lithium enriched brine comprising more than 400 mg/L but less than 2000 mg/L lithium, less than 1200 mg/L sodium, more than 10 mg/L but less than 200 mg/L potassium, less than 200 mg/L magnesium, more than 100 mg/L but less than 600 g/L calcium, more than 5 mg/L but less than 40 mg/L strontium, less than 10 mg/L boron, iron, manganese, and zinc, less than 20 mg/L silica, more than 90 mg/L sulfate, less than 10 g/L total dissolved solids, and having an oxidation reduction potential, ORP, of less than 0.

14. Method for extracting lithium or lithium salts from a brine, comprising steps of:
receiving (S10) the brine;
removing (S20) carbon dioxide, silica and transition metals from the brine to obtain a treated brine by modifying a pH of the brine to 4 to 5, preferably about 4.5 in a first pH modification unit, depressurizing the brine to about atmospheric pressure in a depressurization unit positioned downstream from the first pH modification unit, modifying the pH of the brine to 9 to 11, preferably about 10, prior to resting the brine in a precipitation tank in a second pH modification unit positioned downstream from the depressurization unit, removing a precipitate including the silica and the transition metals from the brine in a precipitate filter unit positioned downstream from the second pH modification unit and modifying the pH of the brine to 5 to 6 in a third pH modification unit positioned downstream from the precipitate filter unit to obtain the treated brine;
extracting (S30) a lithium enriched brine comprising the lithium or lithium salts from the treated brine to obtain a lithium depleted brine; and
redissolving (S40) at least part of the precipitate and adding it to the lithium depleted brine to obtain a treated lithium depleted brine for reinjection into a geothermal reservoir.

15. A treated brine comprising more than 50 mg/L but less than 225 mg/L lithium, less than 45 g/L sodium, less than 8 g/L potassium, less than 10 mg/L magnesium, less than16 g/L calcium, less than 700 mg/L strontium, less than 80 mg/L boron, less than 5 mg/L of iron, manganese, zinc, less than 9 mg/L silica, more than 90 mg/L sulfate, having a total dissolved solids of more than 50 g/L but less than 200 g/L.

16. A lithium depleted brine comprising more than 0.001 mg/L but less than 30 mg/L lithium, less than 65 g/L sodium, less than 8 g/L potassium, less than 30 mg/L magnesium, less than16 g/L calcium, less than 700 mg/L strontium, less than 80 mg/L boron, more than 90 mg/L sulfate, having a total dissolved solids of more than 50 g/L but less than 200 g/L.

17. A treated lithium depleted brine for reinjection comprising more than 0.001 mg/L but less than 30 mg/L lithium, less than 45 g/L sodium, less than 8 g/L potassium, less than 200 mg/L magnesium, less than16 g/L calcium, less than 700 mg/L strontium, less than 80 mg/L boron, more than 1 mg/L but less than 35 mg/L iron, more than 1 mg/L but less than 35 mg/L manganese, more than 1 mg/L but less than 25 mg/L zinc and more than 1 mg/L but less than 160 mg/L silica, more than 90 mg/L sulfate, more than 50 g/L but less than 200 g/L total dissolved solids.

18. A lithium enriched brine comprising more than 400 mg/L but less than 2000 mg/L lithium, less than 1200 mg/L sodium, more than 10 mg/L but less than 200 mg/L potassium, less than 200 mg/L magnesium, more than 100 mg/L but less than 600 g/L calcium, more than 5 mg/L but less than 40 mg/L strontium, less than 10 mg/L boron, iron, manganese, and zinc, less than20 mg/L silica, more than 90 mg/L sulfate, less than 10 g/L total dissolved solids, and having an oxidation reduction potential, ORP, of less than 0.
